# EUROPÄISCHE PATENTANMELDUNG

(11) **EP 0 829 219 A2**
(43) Veröffentlichungstag der Anmeldung: **18.03.1998**
(21) Anmeldenummer: 97114634.5
(22) Anmeldetag: 23.08.1997
(51) Int. Cl.: A47J 31/08

(54) **Filterpapiereinsatz für ein Filtergefäss**

(30) Priorität: 17.09.1996 DE 29616171 U
(71) Anmelder: MELITTA HAUSHALTSPRODUKTE GmbH & Co. Kommanditgesellschaft, D-32427 Minden (DE)
(72) Erfinder: Boller, Martin, 32469 Petershagen (DE); Dölfel, Rainer, Dr., 32547 Porta Westfalica (DE)
(74) Vertreter: Stracke, Alexander, Dipl.-Ing.

(57) **Zusammenfassung**

Gegenstand der Erfindung ist ein Filterpapiereinsatz (10) für ein Filtergefäß, insbesondere zur Herstellung von Aromaauszügen aus Kaffee oder Tee.

Der Filterpapiereinsatz (10) ist aus einem Schlauchabschnitt aus einem mindestens einmal gefalteten, einstückigen Zuschnitt mit einer in Mantellängsrichtung des Schlauchabschnittes verlaufenden Seitennaht (11) gefertigt.

Ein derartiger Filterpapiereinsatz kann von einem Endlosschlauch in beliebigen Längen abgetrennt werden, so daß praktisch alle Einsatzgrößen auf einem Maschinentyp gefertigt werden können. Der Filterpapiereinsatz (10) ist auch äußerst bequem zu handhaben und kann vor seinem Gebrauch flachliegend und platzsparend aufbewahrt, verpackt und transportiert werden.

## Beschreibung

Die vorliegende Erfindung betrifft einen Filterpapiereinsatz für ein Filtergefäß, insbesondere zur Herstellung von Aromaauszügen aus Kaffee oder Tee. Der vorliegenden Erfindung liegt die Aufgabe zugrunde, einen Filterpapiereinsatz für ein Filtergefäß, insbesondere zur Herstellung von Aromaauszügen aus Kaffee oder Tee zu schaffen, der sowohl preiswert herstellbar wie auch in der Praxis gut handhabbar ist.

Diese Aufgabe wird erfindungsgemäß dadurch gelöst, daß der Filterpapiereinsatz aus einem Schlauchabschnitt aus einem mindestens einmal gefalteten, einstückigen Zuschnitt mit einer in Mantellängsrichtung des Schlauchabschnittes verlaufenden Seitennaht besteht.

Ein derartiger Filterpapiereinsatz ist insofern besonders preiswert herstellbar, als bei seiner Fertigung praktisch keinerlei Verschnitt oder Abfall entsteht.

Der erfindungsgemäße Filterpapiereinsatz ist auch äußerst bequem zu handhaben, da er vor seinem Gebrauch flachliegend und somit äußerst platzsparend aufbewahrt, verpackt und transportiert werden kann und bei seiner endgültigen Benutzung durch einfaches Aufziehen in seine Gebrauchsstellung gebracht werden kann.

Ein Filterpapiereinsatz gemäß vorliegender Erfindung kann von einem Endlosschlauch in beliebigen Längen abgetrennt werden, so daß praktisch alle Einsatzgrößen auf einem Maschinentyp gefertigt werden können.

Filterpapiereinsätze können von einem Endlosschlauch vollkommen abgetrennt und somit vereinzelt und dann entsprechend verpackt werden, es besteht aber auch die Möglichkeit, einen Endlosschlauch lediglich mit Perforationslinien zum Abtrennen einzelner Filterpapiereinsätze durch den Verbraucher auszustatten.

Dabei kann die jeweilige Losgröße in Zick-Zack-Form aufeinandergelegt oder auch auf eine Rolle aufgewickelt sein.

Vor dem Gebrauch muß der Filterpapiereinsatz an einem stirnseitigen Ende verschlossen werden. Das Verschließen an einem stirnseitigen Ende kann schon bei der Fertigung erfolgen, so kann beispielsweise ein stirnseitiges Ende des Filterpapiereinsatzes z. B. durch eine Prägenaht, durch eine Klebenaht oder dergleichen dauerhaft verschlossen sein.

Es ist aber auch möglich, einen erfindungsgemäßen Filterpapiereinsatz erst unmittelbar vor seiner Benutzung an einem stirnseitigen Ende zu verschließen, beispielsweise durch mehrfaches Umfalten oder durch eine Klammer, ein Band oder dergleichen.

Da ein erfindungsgemäßer Filterpapiereinsatz bei seiner Benutzung in ein entsprechend geformtes Filtergefäß eingesetzt wird, kann auch in diesem Filtergefäß eine klammerartige Vorrichtung sein, mittels derer ein stirnseitiges Ende des Filterpapiereinsatzes verschlossen wird.

Der Vorteil eines nur während der Benutzung einseitig verschlossenen Filterpapiereinsatzes ist darin zu sehen, daß bei der Entsorgung des Filterkuchens aus dem Filterpapiereinsatz das untere Ende auch wieder geöffnet werden kann, so daß der besagte Filterkuchen praktisch durch den Bodenbereich des Filterpapiereinsatzes entsorgt werden kann.

Weitere Merkmale der Erfindung sind Gegenstand weiterer Unteransprüche.

In der beigefügten Zeichnung sind Ausführungsbeispiele der Erfindung dargestellt, die im folgenden näher beschrieben werden.

Es zeigen:
- Figur 1: eine perspektivische Darstellung eines erfindungsgemäßen Filterpapiereinsatzes,
- Figur 2: eine perspektivische Darstellung eines Filterpapiereinsatzes nach einem weiteren Ausführungsbeispiel der Erfindung,
- Figur 3: eine Stirnansicht eines erfindungsgemäßen Filiterpapiereinsatzes nach einem weiteren Ausführungsbeispiel der Erfindung,
- Figur 4: eine perspektivische Teildarstellung eines Filterpapiereinsatzes nach einem weiteren Ausführungsbeispiel der Erfindung,
- Figur 5: eine perspektivische Darstellung eines Filterpapiereinsatzes nach einem weiteren Ausführungsbeispiel der Erfindung,
- Figur 6: einen Filterpapiereinsatz gemäß Figur 5 in seiner Gebrauchsstellung.

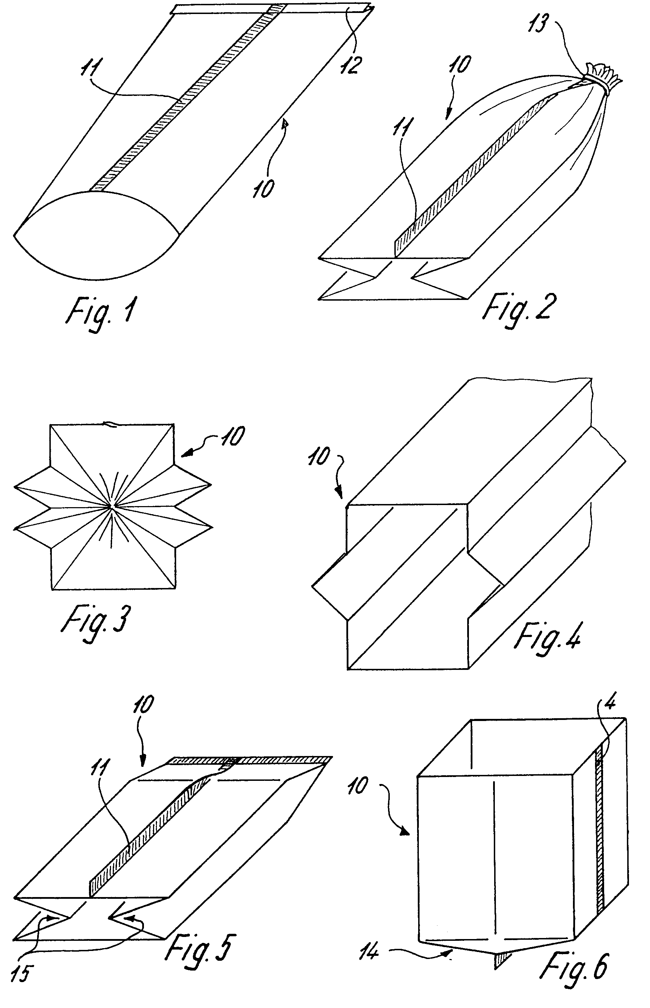

In Figur 1 ist - wie in den übrigen Figuren 2 - 4 - mit dem Bezugszeichen 10 ein Filterpapiereinsatz bezeichnet, der für den Einsatz in einem entsprechend geformten Filtergefäß vorgesehen ist. Ein derartiger Filterpapiereinsatz 10 ist insbesondere zur Herstellung von Aromaauszügen aus Kaffee oder Tee bestimmt, kann aber auch in anderen Bereichen, wo es darauf ankommt, Filtrationsvorgänge durchzuführen, eingesetzt werden, z. B. im Laborbereich.

Der Filterpapiereinsatz 10 gemäß Figur 1 ist aus einem einstückigen, durch zweifaches Falten zu einem Schlauchabschnitt zusammengefügten Zuschnitt hergestellt und weist eine in seiner Mantellängsrichtung verlaufende Seitennaht 11 auf.

Dieser Filterpapiereinsatz 10 kann aus dem flachliegenden Zustand heraus zu einem ovalen, oder kreisförmigen Querschnitt aufgeweitet werden und mit einer Substanz gefüllt werden, aus der ein Filtrat gewonnen werden soll.

An einem stirnseitigen Ende ist der Filterpapiereinsatz 10 verschlossen, bei dem Ausführungsbeispiel gemäß Figur 10 durch mehrfaches Umfallen einer Bodenkante 12.

Diese mehrfach umgefaltete Bodenkante 12 kann gegebenenfalls noch durch eine Klammer gesichert werden.

Der Filterpapiereinsatz 10 gemäß Figur 2 ist insgesamt mehrfach gefaltet und weist in geöffneter Gebrauchsstellung einen mehreckigen Grundriß auf.

Auch der Filtepapiereinsatz 10 gemäß Figur 2 besteht aus einem Schlauchabschnitt mit einer in Mantellängsrichtung verlaufenden Seitennaht 11.

Figur 2 zeigt, daß der Filterpapiereinsatz 10 im Bereich eines stirnseitigen Endes auch durch ein Band 13 verschlossen sein kann.

Um einen erfindungsgemäßen Filterpapiereinsatz 10 im Bereich eines stirnseitigen Endes zu verschließen, können in dem zu verschließenden Endbereich auch Prägenähte oder Klebenähte vorgesehen sein.

Die Figuren 3 und 4 zeigen weitere Filterpapiereinsätze 10 gemäß vorliegender Erfindung, wobei durch diese Figuren 3 und 4 angedeutet werden soll, daß insbesondere bei mehrfacher Faltung eines Zuschnittes letztendlich beliebige mehreckige Formen gebildet werden können, wobei der gemeinsame Vorteil dieser Ausführungsformen darin liegt, daß ein derartiger Filterpapiereinsatz 10 in Nichtgebrauchsstellung zu einem flachliegenden Gebilde platzsparend zusammengelegt werden kann. Dennoch kann das nutzbare Füllvolumen aufgrund der mehrfachen Faltung und der sich daraus ergebenden großen Umfangslinie recht beträchtlich sein.

In Figur 5 ist ein Ausführungsbeispiel für einen Filterpapiereinsatz 10 gezeigt, der im aufgerichteten Zustand, so wie in Figur 6 dargestellt, eine rechteckige Querschnittsform aufweist. Der Boden 14 dieses Filterpapiereinsatzes 10 läßt sich aufgrund der vorhandenen Seitenfalten 15 zu einer etwa ebenen Grundfläche zusammenfalten, so daß in den Filterpapiereinsatz 10 eingefülltes Kaffeemehl während des Filtrationsvorganges eine gleichmäßige Füllhöhe aufweist, wodurch eine sehr gute Ausnutzung des Kaffees durch Verbesserung der Extraktion erreicht wird.

Die rechteckige Querschnittsform des Filterpapiereinsatzes 10 führt zu einer ebenfalls rechteckigen Querschnittsform des zu verwendenden Filtergefäßes, so daß wie bei den übrigen Filterpapiereinsätzen und entsprechend gestalteten Filtergefäßen generell der Vorteil erzielt wird, daß das Gesamtvolumen des Filtergefäßes gegenüber herkömmlichen und bekannten Filterpapiereinsätzen verringert werden kann, da kein ungenutzter Leerraum beansprucht wird.

## Patentansprüche

1. Filterpapiereinsatz für ein Filtergefäß, insbesondere zur Herstellung von Aromaauszügen aus Kaffee oder Tee, **dadurch gekennzeichnet, daß** der Filterpapiereinsatz (10) aus einem Schlauchabschnitt aus einem mindestens einmal gefalteten, einstückigen Zuschnitt mit einer in Mantellängsrichtung des Schlauchabschnittes verlaufenden Seitennaht (11) besteht.

2. Filterpapiereinsatz nach Anspruch 1, **dadurch gekennzeichnet, daß** der Filterpapiereinsatz (10) in geöffneter Gebrauchsstellung einen ovalen, etwa kreisförmigen oder kreisförmigen Querschnitt aufweist.

3. Filterpapiereinsatz nach Anspruch 1, **dadurch gekennzeichnet, daß** der Filterpapiereinatz (10) in geöffneter Gebrauchsstellung einen mehreckigen Querschnitt aufweist.

4. Filterpapiereinsatz nach einem der vorhergehenden Ansprüche, **dadurch gekennzeichnet, daß** ein stirnseitiges Ende des Filterpapiereinsatzes z. B. durch eine Prägenaht, durch eine Klebenaht oder dergleichen dauerhaft verschlossen ist.

5. Filterpapiereinsatz nach einem der Ansprüche 1 - 3, **dadurch gekennzeichnet, daß** ein stirnseitiges Ende des Filterpapiereinsatzes (10) durch mehrfaches Umfalten verschlossen ist.

6. Filterpapiereinatz nach einem der Ansprüche 1 - 3, **dadurch gekennzeichnet, daß** ein stirnseitiges Ende des Filterpapiereinsatzes (10) durch eine Klammer, ein Band (13) oder dergleichen verschlossen ist.

7. Filterpapiereinsatz nach einem oder mehreren der vorhergehenden Ansprüche, **dadurch gekennzeichnet, daß** der Filterpapiereinsatz (10) in geöffneter Gebrauchsstellung einen rechteckigen Querschnitt aufweist.

8. Filterpapiereinsatz nach Anspruch 7, **dadurch gekennzeichnet, daß** der Filterpapiereinsatz (19) zwei Seitenfasen aufweist und daß der Boden (14) in Gebrauchsstellung etwa eine ebene Grundfläche bildet.
